# EUROPÄISCHE PATENTSCHRIFT

(11) **EP 3 851 729 B1**
(45) Veröffentlichungstag und Bekanntmachung des Hinweises auf die Patenterteilung: **08.11.2023**
(21) Anmeldenummer: 20152239.8
(22) Anmeldetag: 16.01.2020
(51) Int. Cl.: G01S 17/04, G01S 17/931, F16P 3/12, F16P 3/14, G01S 17/42

(54) **OPTISCHER SENSOR UND EIN VERFAHREN ZUR ERFASSUNG VON OBJEKTEN MITTELS EINES OPTISCHEN SENSORS**
OPTICAL SENSOR AND METHOD FOR DETECTING OBJECTS USING AN OPTICAL SENSOR
CAPTEUR OPTIQUE ET PROCÉDÉ DE DÉTECTION DES OBJETS AU MOYEN D'UN CAPTEUR OPTIQUE

(43) Veröffentlichungstag der Anmeldung: 21.07.2021
(73) Patentinhaber: Leuze electronic GmbH + Co. KG, 73277 Owen/Teck (DE)
(72) Erfinder: Feller, Bernhard, 86316 Friedberg (DE); Wursthorn, Viktor, 72636 Frickenhausen (DE); Hess, Alexander, 68199 Mannheim (DE); Brunner, Rolf, 82223 Eichenau (DE)
(74) Vertreter: Ruckh, Rainer Gerhard

(56) Entgegenhaltungen:
- EP-A1- 2 302 416
- EP-A1- 2 315 052
- EP-A1- 3 217 195

## Beschreibung

Die Erfindung betrifft einen optischen Sensor und ein Verfahren zur Erfassung von Objekten mittels eines optischen Sensors.

Derartige optische Sensoren werden typischerweise im Bereich der Sicherheitstechnik zur Gefahrenbereichsüberwachung eingesetzt. Dabei wird in der Auswerteeinheit des optischen Sensors entsprechend der Größe des Gefahrenbereichs ein Schutzfeld definiert und abgespeichert. Die Überwachungsfunktion des optischen Sensors ist dann derart, dass mit diesem kontrolliert wird, ob ein gefahrbringendes, das heißt unzulässiges Objekt in das Schutzfeld eindringt. Ist dies der Fall, wird mit dem optischen Sensor ein Objektfeststellungssignal generiert, das zur Einleitung einer Sicherheitsmaßnahme verwendet werden kann.

Der optische Sensor kann insbesondere an einer beweglichen Einheit wie einem Fahrzeug montiert sein. Das Fahrzeug kann beispielsweise als fahrerloses Transportsystem ausgebildet sein. In dem Fall ist der optische Sensor an der Frontseite montiert, sodass mit dem Schutzfeld das Vorfeld des Fahrzeugs überwacht wird. Dringt ein Objekt in das Schutzfeld ein und wird dadurch ein Objektfeststellungssignal im optischen Sensor generiert, so wird dadurch als Sicherheitsmaßnahme das Fahrzeug abgebremst oder angehalten.

Problematisch ist insbesondere im letzteren Fall, dass eine Definition nur eines fest vorgegebenen Schutzfelds zur Erzielung einer vollständigen, dauerhaften Überwachungsfunktion nicht geeignet ist. Wenn beispielsweise das Fahrzeug in einer Kurve fährt, sodass eine an sich unkritische Umgebungskontur in das Schutzfeld ragt. Der optische Sensor löst dann durch die Generierung eines Objektfeststellungssignals einen Stillstand des Fahrzeugs aus, obwohl keine Gefährdungssituation vorliegt.

Aus der EP 3 330 740 A1 ist ein optischer Sensor mit einer Sensorsignale generierenden Sensoreinheit und eine Auswerteeinheit, in welcher die Sensorsignale ausgewertet werden, bekannt. In der Auswerteeinheit ist ein innerhalb des Erfassungsbereichs liegendes, von einer Schutzfeldgrenze begrenztes Schutzfeld vorgegeben. In der Auswerteeinheit wird ein Objektfeststellungssignal generiert, wenn anhand der Sensorsignale ein Eindringen eines unzulässigen Objekts in das Schutzfeld registriert wird. Bei Erfassen des Eindringens einer zulässigen Objektstruktur wird über einen Teil der Schutzfeldgrenze in das Schutzfeld mittels der Sensoreinheit in der Auswerteeinheit dieser Teil der Schutzfeldgrenze durch die Kontur der zulässigen Objektstruktur ersetzt.

Die EP 3 217 195 A1 betrifft einen optischen Sensor zur Erfassung von Objekten in einem Erfassungsbereich, mit wenigstens einem Sendelichtstrahlen ermittierenden Sender, wenigstens einem Empfangslichtstrahlen empfangenden Empfänger und einer Auswerteeinheit zur Auswertung von im Empfänger generierten Empfangssignalen. In der Auswerteeinheit wird ein Objektfeststellungssignal generiert, wenn innerhalb eines aktivierten Schutzfelds ein Objekt erfasst wird. Weiterhin sind Umschaltmittel vorgesehen, mittels derer ein Schutzfeld aus einer Anzahl von Schutzfeldern mit unterschiedlichen Schutzfeldkonfigurationen aktivierbar ist, wobei unterschiedliche Schutzfeldkonfigurationen durch unterschiedliche Eigenschaften von zu detektierenden Objekten und/oder von Steuerungsgrößen definiert sind.

In der EP 2 315 052 Al wird ein Sicherheitsscanner zur Absicherung eines Überwachungsbereichs angegeben, wobei der Sicherheitsscanner einen Lichtsender zum Aussenden eines Lichtstrahls, eine Ablenkeinheit zur periodischen Ablenkung des Lichtstahls in den Überwachungsbereich, einen Lichtempfänger zum Erzeugen von Empfangssignalen aus dem von Objekten in dem Überwachungsbereich remittierten Lichtstrahl sowie eine Auswertungseinheit aufweist, die dafür ausgebildet ist, anhand der Empfangssignale Eingriffe in ein Schutzfeld innerhalb des Überwachungsbereichs zu erkennen und daraufhin ein Absicherungssignal außer für den Fall bereitzustellen, dass der Eingriff einem erwarteten Gefährdungsobjekt zugeordnet werden kann. Dabei ist die Auswertungseinheit dafür ausgebildet, das Gefährdungsobj ekt in dem Schutzfeld zu verfolgen und die Zuordnung von Eingriffen zu dem erwarteten Gefährdungsobjekt anhand der Kontur und der aktuellen Position, Orientierung und/oder Geschwindigkeit des Gefährdungsobjekts vorzunehmen.

Die EP 2 302 416 Al betrifft einen Sicherheitsscanner zur Absicherung der Umgebung eines Fahrzeugs, insbesondere fahrerlosen Transportsystems, mit einem Lichtsender, einer Lichtablenkeinheit zur Ablenkung des Lichtes in ein zu überwachendes Schutzfeld, einem Empfänger zur Bereitstellung von Empfangssignalen in Abhängigkeit von an im Sichtbereich des Scanners vorhandenen Objekten remittiertem Licht, einer Auswerteeinheit zur Auswertung der Empfangssignale und der Inkrementalgebersingale und zur Bereitstellung eines Sicherheitssignals, einem ersten, mit einer Fahrzeuggeschwindigkeitsbestimmungseinheit verbundenen Eingang zum Empfang von ersten Signalen, die für eine Fahrzeuggeschwindigkeit repräsentativ sind und mit Umschaltmitteln zum sicheren Umschalten zwischen wenigstens zwei unterschiedlichen Schutzfeldern in Abhängigkeit der Fahrzeuggeschwindigkeit.

Der Erfindung liegt die Aufgabe zugrunde die Funktionalität eines optischen Sensors und eines Verfahrens der eingangs genannten Art zu verbessern.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Erfassungsbereich, wobei in dem optischen Sensor ein Schutzfeld vorgegeben ist. Bei Erfassen eines Objekteingriffs im Schutzfeld wird in dem optischen Sensor ein Objektfeststellungssignal generiert. Im optischen Sensor wird abhängig von der Erfassung eines zulässigen Objekts ein Restschutzfeld innerhalb des Schutzfeldes generiert. Bei einem Objekteingriff im Restschutzfeld wird im optischen Sensor nur dann ein Objektfeststellungssignal generiert, wenn dieser Objekteingriff eine Abweichung von einer zulässigen Objektstruktur darstellt.

Die Erfindung betrifft weiterhin ein Verfahren zur Erfassung von Objekten mittels eines optischen Sensors.

Ein wesentlicher Vorteil der Erfindung besteht darin, dass mit dem optischen Sensor eine sichere Objektdetektion in Gefahrenbereichen durchgeführt werden kann, sodass dieser insbesondere als Sicherheitssensor in sicherheitstechnischen Applikationen eingesetzt werden kann.

Wesentlich ist, dass mit dem optischen Sensor eine Unterscheidung von zulässigen und nicht zulässigen Objekten erfolgt. Nicht zulässige Objekte wie zum Beispiel Personen stellen Gefährdungen dar, sodass bei Detektion eines nicht zulässigen Objekts mittels des optischen Sensors ein Objektfeststellungssignal generiert wird, das zur Auslösung einer Sicherheitsfunktion führt, wie zum Beispiel dem Stillsetzen einer Maschine, Anlage oder eines Fahrzeugs, welche mit dem optischen Sensor überwacht werden. Die Detektion zulässiger Objekten führt dagegen vorteilhaft nicht zur Generierung eines Objektfeststellungssignals und damit nicht zu der Auslösung der Sicherheitsfunktion, sodass unnötige Stillstandzeiten der Maschine, der Anlage oder des Fahrzeugs vermieden werden.

Erfindungsgemäß wird abhängig von der Erfassung eines zulässigen Objekts ein Restschutzfeld innerhalb des Schutzfeldes, in welchem anfangs allein eine Objektüberwachung erfolgt, definiert.

Durch die Bildung des Restschutzfeldes und die erfindungsgemäße Überwachung auf das Vorhandensein zulässiger Objektstrukturen können auch mit hoher Geschwindigkeit relativ zum optischen Sensor bewegte zulässige Objekte als solche erkannt werden, sodass diese nicht zur Generierung eines Objektfeststellungssignals und einer unnötigen Auslösung der Sicherheitsfunktion führen.

Insbesondere ist vorteilhaft, dass das Restschutzfeld völlig unabhängig von der Relativgeschwindigkeit der erfassten zulässigen Objekte zum optischen Sensor definiert werden kann. Die Prüfung, ob unzulässige Objekte innerhalb des Restschutzfeldes vorhanden sind, kann sofort mit der Generierung des Restschutzfeldes erfolgen, wobei auch diese Objekterfassung geschwindigkeitsunabhängig erfolgt.

Damit kann die Objektdetektion mit sehr kurzen Reaktionszeiten erfolgen, ohne dass eine zusätzliche Sensorik zur Geschwindigkeitsbestimmung erforderlich wäre.

Ein weiterer wesentlicher Aspekt der Erfindung besteht darin, dass innerhalb des Restschutzfeldes eine von der Objekterfassung innerhalb des Schutzfeldes unterschiedliche Auswertung zur Objektdetektion erfolgt.

Die Objektdetektion innerhalb des Schutzfeldes erfolgt im einfachsten Fall derart, dass bei jedem Objekteingriff im Schutzfeld das Objektfeststellungssignal generiert wird. Diese Auswertung kann sehr schnell und einfach erfolgen.

Prinzipiell ist es auch möglich, anhand einer Erkennung charakteristischer Merkmale von zulässigen Objekten diese von gefahrbringenden nicht zulässigen Objekten zu unterscheiden und das Objektfeststellungssignal nur zu generieren, wenn ein nicht zulässiges Objekt in das Schutzfeld eindringt.

Die Objekterfassung innerhalb des Restschutzfeldes ist hiervon generell verschieden, da bereits die Definition dieses Restschutzfeldes abhängig von der Detektion von zulässigen Objekten ist.

Vorteilhaft bildet eine von diesem erfasste zulässige Objektkontur eine Grenze des Restschutzfeldes.

Dabei erfolgt die Erfassung der zulässigen Objektkontur und die davon abhängige Bildung des Restschutzfeldes zeitabhängig.

Dadurch erfolgt eine schnelle Anpassung des Restschutzfeldes an zulässige Objekte, die sich auch mit hoher Geschwindigkeit relativ zum optischen Sensor bewegen. Mit dieser Bildung des Restschutzfeldes können diese zulässigen Objekte ausgeblendet werden, sodass sie nicht zu einer unnötigen Generierung eines Objektfeststellungssignals führen.

Die Dimensionierung des Restschutzfeldes erfolgt bevorzugt derart, dass das Restschutzfeld einen Teilbereich des Schutzfeldes bildet.

Insbesondere ist das Restschutzfeld ein Winkelsegment innerhalb des Schutzfeldes.

Das Restschutzfeld ist damit an die Dimensionen der erfassten zulässigen Objekte angepasst.

Die Funktionalität des erfindungsgemäßen optischen Sensors kann dadurch erweitert sein, dass mehrere Schutzfelder und/oder mehrere Restschutzfelder vorgesehen sind.

Die Zuverlässigkeit der Erfassung zulässiger Objekte ergibt sich erfindungsgemäß nicht nur durch eine hieran angepasste Dimensionierung des Restschutzfeldes. Vielmehr erfolgt auch für Objekteingriffe in das Restschutzfeld eine Überprüfung, ob eine zulässige Objektstruktur vorliegt, sodass nur für den Fall, dass die Auswertung im optischen Sensor ergibt, dass der Objekteingriff nicht durch eine zulässige Objektstruktur bewirkt ist, ein Objektfeststellungssignal generiert wird.

Besonders vorteilhaft werden in dem optischen Sensor zulässige Objektstrukturen kennzeichnende Sollwerte abgespeichert, die mit von dem optischen Sensor ermittelten Messwerten als Istwerten verglichen werden.

Insbesondere sind die zulässigen Objektstrukturen von Merkmalen oder Konturen zulässiger Objekte gebildet.

Hierbei wird der Umstand ausgenutzt, dass die zulässigen Objekte bekannte Geometrien aufweisen.

Ist beispielsweise der optische Sensor auf einem Fahrzeug montiert, sind die zulässigen Objekte von stationären Hindernissen wie zum Beispiel Wänden einer Fabrikhalle oder dort installierten Maschinen gebildet.

Dasselbe gilt für einen stationär an einer Anlage montierten optischen Sensor, auf welchen Fahrzeuge oder Fördereinheiten als zulässige Objekte zubewegt werden.

In all diesen Fällen sind die Geometrien der zulässigen Objekte bekannt und können durch Objektmerkmale oder Konturen beschrieben werden.

Diese Merkmale oder Konturen können über eine Eingabeeinheit wie einer graphischen Benutzeroberfläche in den optischen Sensor eingegeben und dort als Sollwerte abgespeichert werden. Beispielsweise können Konturen von zulässigen Objekten in Form von Geraden oder Kurven vorgegeben werden.

Alternativ ist es möglich, die Konturen durch Messungen mit dem optischen Sensor in einem Einlernvorgang zu bestimmen.

Generell erfolgt die Erkennung von zulässigen Objekten durch einen Vergleich der Messwerte des optischen Sensors als Istwerte mit den abgespeicherten Sollwerten.

Mit dem optischen Sensor werden die Messwerte generell in Messzyklen zyklisch generiert.

Im einfachsten Fall werden die Messwerte eines Messzyklus direkt als Istwert mit den Sollwerten verglichen, wodurch zulässige Objekte sehr schnell erfasst werden können.

Alternativ werden in mehreren Messzyklen Messwerte ermittelt und anschließend gemittelt, wobei die gemittelten Messwerte die Istwerte bilden.

Durch die Mittelung werden Rauscheinflüsse auf die Messwerte weitgehend eliminiert, sodass eine sehr sichere und zuverlässige Erfassung zulässiger Objekte ermöglicht wird.

Besonders vorteilhaft ist der optische Sensor ein Distanzsensor, sodass eine Positionsbestimmung von Objekten im Schutzfeld oder Restschutzfeld ermöglicht wird.

Insbesondere ist der optische Sensor ein Kamerasensor oder ein Laserscanner.

Damit kann in flächigen oder räumlichen Bereichen eine Positionsbestimmung von Objekten durchgeführt werden.

Die Erfindung wird im Folgenden anhand der Zeichnungen erläutert. Es zeigen:
- Figur 1a, b:: Zwei Varianten eines ersten Ausführungsbeispiels des erfindungs-gemäßen optischen Sensors.
- Figur 2:: Zweites Ausführungsbeispiel des erfindungsgemäßen optischen Sensors.
- Figur 3a, b:: Erstes Ausführungsbeispiel für eine Schutzfeldüberwachung mit dem erfindungsgemäßen optischen Sensor.
- Figur 3c:: Darstellung von Messwerten für die Anordnung gemäß Figur 3b.
- Figur 4:: Zweites Ausführungsbeispiel für eine Schutzfeldüberwachung mit dem erfindungsgemäßen optischen Sensor.
- Figur 5:: Drittes Ausführungsbeispiel für eine Schutzfeldüberwachung mit dem erfindungsgemäßen optischen Sensor.

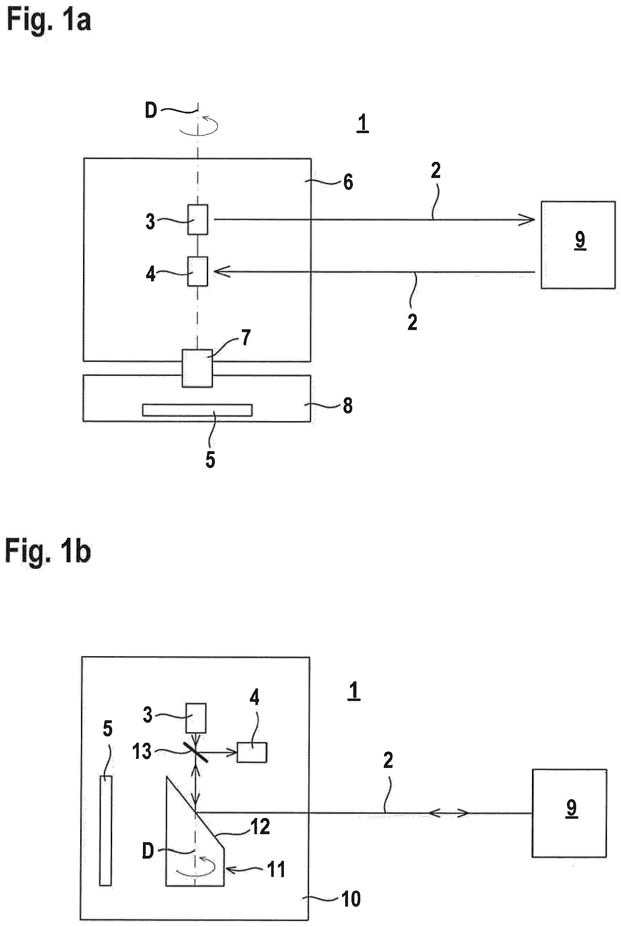

Figur 1a zeigt ein erstes Ausführungsbeispiel des erfindungsgemäßen optischen Sensors 1. Der optische Sensor 1 ist als Flächendistanzsensor ausgebildet, wobei dieser als Sensoreinheit einen Distanzsensor mit einem Lichtstrahlen 2 emittierenden Sender 3 und einen Lichtstrahlen 2 empfangenden Empfänger 4 aufweist. Der Sender 3 ist in Form einer Laserdiode ausgebildet. Mit dem Distanzsensor erfolgt eine Distanzmessung vorzugsweise nach einem Impulslaufzeitverfahren oder nach einem Phasenmessverfahren. Im ersten Fall emittiert der Sender 3 Lichtstrahlen 2 in Form von Lichtpulsen. Im zweiten Fall emittiert der Sender 3 Lichtstrahlen 2, welchen eine Modulation aufgeprägt ist.

Die Auswertung der Sensorsignale des Distanzsensors wird in einer Auswerteeinheit 5 ausgewertet. Für den Fall, dass der optische Sensor 1 als Sicherheitssensor ausgebildet ist, weist die Auswerteeinheit 5 einen redundanten Aufbau auf, beispielsweise in Form zweier sich gegenseitig zyklisch überwachender Rechnereinheiten.

Die Lichtstrahlen 2 des Senders 3 werden periodisch in einen flächigen Erfassungsbereich geführt. Hierzu sind im vorliegenden Fall der Sender 3 und der Empfänger 4 in einem rotierenden Messkopf 6 untergebracht, dessen Seitenwand ein Austrittsfenster für die Lichtstrahlen 2 aufweist. Der Messkopf 6 ist mit einer Drehlagerung 7 auf einem stationären Sockel 8 gelagert. Durch einen nicht dargestellten Antrieb wird der Messkopf 6 um eine mit der Symmetrieachse des Messkopfs 6 zusammenfallenden Drehachse D gedreht. Durch diese Drehbewegung überstreichen die Lichtstrahlen 2 periodisch eine senkrecht zur Drehachse D orientierte Ebene, die den Erfassungsbereich bildet. Je nach Ausführung des optischen Sensors 1 kann der Erfassungsbereich auch nur einen Teilbereich einer Vollumdrehung von 360° umfassen. Der Sender 3 und der Empfänger 4 sind über gegebenenfalls berührungslos arbeitende Zuleitungsmittel in der Drehlagerung 7 an die Auswerteeinheit 5 angeschlossen.

Zur Detektion eines Objekts 9 wird die Laufzeit der Lichtstrahlen 2 des Senders 3 zum Objekt 9 und zurück zum Empfänger 4 ermittelt, woraus die Objektdistanz ermittelt wird. Zusätzlich wird die aktuelle Drehstellung des Messkopfs 6 erfasst. Damit kann die Position des Objekts 9 innerhalb des Erfassungsbereichs bestimmt werden.

Figur 1b zeigt eine Variante der Ausführungsform gemäß Figur 1a des erfindungsgemäßen optischen Sensors 1. Der optische Sensor 1 ist wiederrum als Flächendistanzsensor ausgebildet, der entsprechend zur Ausführungsform gemäß Figur 1a einen Distanzsensor mit einem Sender 3 und Empfänger 4 sowie eine Auswerteeinheit 5 aufweist.

Der optische Sensor 1 gemäß Figur 1b unterscheidet sich vom optischen Sensor 1 gemäß Figur 1a nur hinsichtlich der Strahlablenkung der Lichtstrahlen 2. Bei der Ausführungsform der Figur 1b sind der Sender 3 und der Empfänger 4 wie auch die Auswerteeinheit 5 in einem Gehäuse 10 stationär angeordnet, wobei in der Seitenwand des Gehäuses 10 ein nicht gesondert dargestelltes Austrittsfenster vorgesehen ist, durch welches die Lichtstrahlen 2 geführt sind.

Zur Strahlablenkung der Lichtstrahlen 2 ist im Gehäuse 10 eine motorisch getriebene Ablenkeinheit 11 vorgesehen, die einen Umlenkspiegel 12 aufweist, der um eine senkrecht verlaufende Drehachse D drehbar ist. Damit werden die vom Sender 3 emittierten Lichtstrahlen 2 in einer den Erfassungsbereich bildenden, senkrecht zur Drehachse D verlaufenden Ebene abgelenkt. Die vom Objekt 9 zurückreflektierten Lichtstrahlen 2 verlaufen koaxial zu den vom Sender 3 emittierten Lichtstrahlen 2. Der koaxiale Strahlverlauf wird mittels eines Strahlteilerspiegels 13 erzielt. Je nach Größe des Austrittsfensters kann der Erfassungsbereich auf einen Winkelbereich kleiner als 360° begrenzt werden.

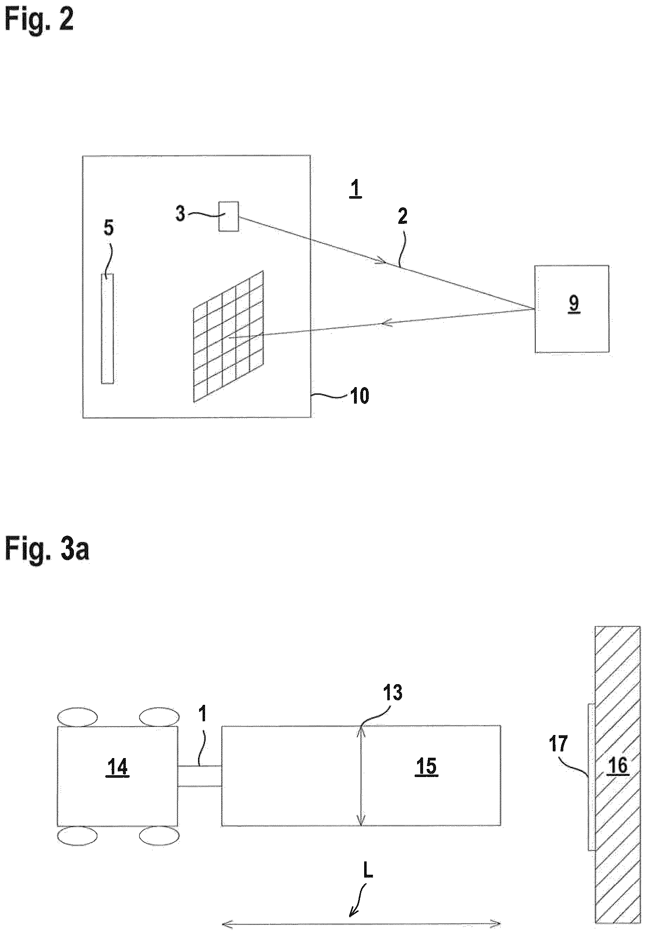

Figur 2 zeigt ein drittes Beispiel eines optischen Sensors 1 in Form eines Kamerasensors. Der Sender 3 emittiert die Lichtstrahlen 2 in einer fest angegebenen Richtung, dem sogenannten Field of View (FOV). Der Empfänger 4 ist in Form einer Kamera, insbesondere eines CCD Arrays oder CMOS Arrays gebildet. Für alle Empfangselemente der Kamera erfolgt eine Distanzmessung nach einem Impulslaufzeitverfahren oder einem Phasenmessverfahren. Dadurch wird ein 3D-Kamerasensor erhalten.

Generell kann der Kamerasensor auch als stereoskopisches Kamerasystem ausgebildet sein.

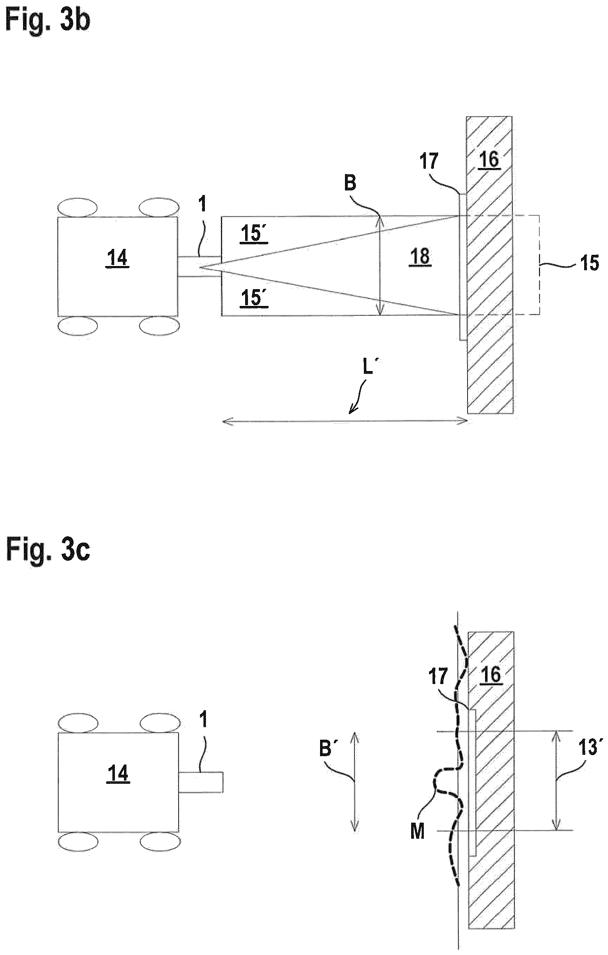

Die Figuren 3a, 3b, 3c zeigen im ersten Ausführungsbeispiel eine Überwachung mit dem erfindungsgemäßen optischen Sensor 1.

Der optische Sensor 1 ist an der Frontseite eines Fahrzeugs 14, beispielsweise eines FTS (fahrerloses Transportsystem) montiert. Mit dem optischen Sensor 1 wird, wie Figur 3a zeigt, ein Schutzfeld 15 im Vorfeld des Fahrzeugs überwacht, das eine Länge L und Breite B aufweist. Wie aus Figur 3a ersichtlich, bewegt sich das Fahrzeug 14 auf eine Wand 16 zu, die ein zulässiges Objekt bildet. An der Oberfläche der Wand 16 ist ein Reflektor 17 befestigt, dessen Breite etwa der Breite B des Schutzfeldes 15 entspricht. Bei der Anordnung von Figur 3a befindet sich das Fahrzeug 14 noch in großer Entfernung zur Wand 16, die demzufolge außerhalb des Schutzfeldes 15 liegt.

Dringt ein Objekt, insbesondere ein unzulässiges, gefahrbringendes Objekt in das Schutzfeld 15 ein, wird dies vom optischen Sensor 1 erfasst. In der Auswerteeinheit 5 wird darauf ein Objektfeststellungssignal generiert, das eine Sicherheitsfunktion auslöst, die in vorliegendem Fall von einem Notstopp des Fahrzeugs 14 gebildet ist.

Das Fahrzeug 14 muss beispielsweise deshalb bis zur Wand 16 vorfahren, um dort Entlade- oder Beladevorgänge durchzuführen. Hierzu ist es erforderlich, dass durch eine Erfassung der Wand 16 innerhalb des Schutzfeldes 15 nicht vorzeitig ein Notstopp des Fahrzeugs 14 ausgelöst wird.

Dies wird durch die erfindungsgemäße Anordnung gemäß den Figuren 3b, 3c erreicht.

Figur 3b zeigt die Situation, wenn sich das Fahrzeug 14 so weit der Wand 16 genähert hat, dass die Wand 16 in das ursprüngliche Schutzfeld 15 (in Figur 3b gestrichelt gezeichnet) ragt.

Erfindungsgemäß wird die Wand 16 durch Erfassung der Kontur des Reflektors 17 mittels des optischen Sensors 1 erkannt.

Die Kontur des Reflektors 17 kann in einem Einlernvorgang bestimmt werden. Im vorliegenden Fall wird die Kontur als Parameterwert in der Auswerteeinheit 5 abgespeichert. Im vorliegenden Fall ist diese Kontur eine Gerade. Bewegt sich das Fahrzeug 14 jedoch schnell auf die Wand 16 zu und ist der optische Sensor 1 als Scanner (Figur 1 und 2) ausgebildet, so bewegt sich das Fahrzeug 14 innerhalb eines Scans zwischen dem Zeitpunkt der Erfassung des linken und rechten Rands signifikant auf die Wand 16 zu, sodass die Kontur des Reflektors 17 als gekrümmte Kurve ausgebildet ist.

Während der Fahrt auf die Wand 16 zu wird der Reflektor 17 im Bereich B' (Figur 3c) vom optischen Sensor 1 detektiert und die dabei erhaltenen Messwerte (Messkontur M in Figur 3c) werden mit den Sollwerten der abgespeicherten Kontur des Reflektors 17 verglichen.

Stimmen die Istwerte (Messkontur M) mit den Sollwerten innerhalb vorgegebener Toleranzgrenzen überein, gilt der Reflektor 17 und damit die Wand 16 als zulässiges Objekt erkannt.

Darauf wird in dem optischen Sensor 1 abhängig von der Erfassung des Reflektors 17 ein Restschutzfeld 18 innerhalb des verbleibenden Schutzfeldes 15 generiert. Das Restschutzfeld 18 reicht bis zur Wand 16 dessen Länge beträgt L'<L.

Das Restschutzfeld 18 weist als Grenze den Reflektor 17 auf und bildet ein vom optischen Sensor 1 ausgehendes Winkelsegment.

Beidseits dieses Restschutzfeldes 18 erstreckt sich das verbleibende Schutzfeld 15'.

Alternativ kann das Restschutzfeld 18 rechteckig ausgebildet sein und das Schutzfeld 15' ersetzen.

Die weitere Auswertung im optischen Sensor 1 erfolgt dann derart, dass jeder Objekteingriff im Schutzfeld 15' zur Generierung des Objektfeststellungssignals führt.

Innerhalb des Restschutzfeldes 18 erfolgt dagegen die Auswertung derart, dass geprüft wird, ob alleine die zulässige Objektstruktur des Reflektors 17, das heißt der Wand 16 registriert wird. Ist dies der Fall, wird kein Objektfeststellungssignal generiert und keine Sicherheitsfunktion ausgelöst und das Fahrzeug 14 kann sich der Wand 16 weiter nähern. Wird jedoch eine unzulässige Objektstruktur detektiert, beispielsweise eine Person vor der Wand 16, generiert der optische Sensor 1 das Objektfeststellungssignal und das Fahrzeug 14 wird angehalten.

Bei weiterer Annäherung an die Wand 16 wird das Restschutzfeld 18 und auch das verbleibende Schutzfeld 15' an die sich verändernde Position der Wand 16 fortlaufend angepasst.

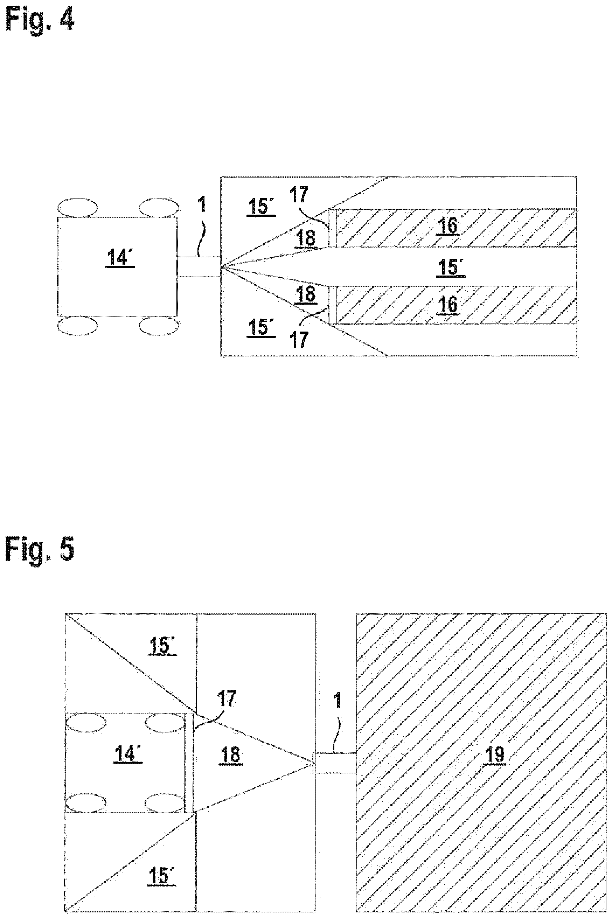

Figur 4 zeigt ein weiteres Beispiel einer mit dem optischen Sensor 1 durchgeführten Überwachung. Der optische Sensor 1 befindet sich wieder an der Frontseite eines Fahrzeugs 14'.

In diesem Fall fährt das Fahrzeug 14' auf einen schmalen Gang zwischen zwei Wänden 16 zu. An den dem Fahrzeug 14' zugewandten Seiten dieser Wände 16 sind wieder Reflektoren 17 angebracht, anhand derer diese als zulässige Objekte erkannt werden.

Dementsprechend bilden die von den Reflektoren 17 begrenzten Winkelsegmente Restschutzfelder 18. Daran schließen mehrere Schutzfelder 15' an.

Die Festlegung des Restschutzfeldes 18 und die Objekterfassung in dem Restschutzfeld 18 und den Schutzfeldern 15' erfolgt analog zu dem Ausführungsbeispiel der Figuren 3a, 3b, 3c.

Figur 5 zeigt ein weiteres Beispiel einer mit dem optischen Sensor 1 durchgeführten Überwachung.

In diesem Fall ist der optische Sensor 1 an der Frontseite einer stationären Maschine 19 angeordnet.

Das zulässige Objekt ist in diesem Fall von einem Fahrzeug 14' gebildet, das sich auf die Maschine 19 zubewegt. An der Frontseite befindet sich wieder ein Reflektor 17 anhand dessen das Fahrzeug 14' als zulässiges Objekt erkannt wird. Abhängig hiervon wird wieder ein Restschutzfeld 18 definiert. Weiterhin sind zwei Schutzfelder 15' vorgesehen.

Die Festlegung des Restschutzfeldes 18 und die Objekterfassung im Restschutzfeld 18 und den Schutzfeldern 15' erfolgt analog zu dem Ausführungsbeispiel der Figuren 3a, 3b, 3c.

### Bezugszeichenliste

- (1): Optischer Sensor
- (2): Lichtstrahlen
- (3): Sender
- (4): Empfänger
- (5): Auswerteeinheit
- (6): Messkopf
- (7): Drehlagerung
- (8): Sockel
- (9): Objekt
- (10): Gehäuse
- (11): Ablenkeinheit
- (12): Umlenkspiegel
- (13): Strahlteilerspiegel
- (14, 14'): Fahrzeug
- (15, 15'): Schutzfeld
- (16): Wand
- (17): Reflektor
- (18): Restschutzfeld
- (19): Maschine

- B, B': Breite
- D: Drehachse
- L, L': Länge
- M: Messkontur

## Patentansprüche

1. Optischer Sensor (1) zur Erfassung von Objekten (9) in einem Erfassungsbereich, wobei in dem optischen Sensor (1) ein Schutzfeld (15, 15') vorgegeben ist, und wobei in dem optischen Sensor (1) bei Erfassen eines Objekteingriffs im Schutzfeld (15, 15') ein Objektfeststellungssignal generiert wird, **dadurch gekennzeichnet, dass** im optischen Sensor (1) abhängig von der Erfassung eines zulässigen Objekts ein Restschutzfeld (18) innerhalb des Schutzfeldes (15, 15') generiert wird, und dass bei einem Objekteingriff im Restschutzfeld (18) im optischen Sensor (1) nur dann ein Objektfeststellungssignal generiert wird, wenn dieser Objekteingriff eine Abweichung von einer Objektstruktur des zulässigen Objekts darstellt.

2. Optischer Sensor (1) nach Anspruch 1, **dadurch gekennzeichnet, dass** eine von diesem erfasste zulässige Objektkontur eine Grenze des Restschutzfeldes (18) bildet.

3. Optischer Sensor (1) nach einem der Ansprüche 1 oder 2, **dadurch gekennzeichnet, dass** die Erfassung der zulässigen Objektkontur und die davon abhängige Bildung des Restschutzfeldes (18) zeitabhängig erfolgt.

4. Optischer Sensor (1) nach einem der Ansprüche 1 bis 3, **dadurch gekennzeichnet, dass** das Restschutzfeld (18) einen Teilbereich des Schutzfeldes (15, 15') bildet.

5. Optischer Sensor (1) nach einem der Ansprüche 1 bis 4, **dadurch gekennzeichnet, dass** das Restschutzfeld (18) ein Winkelsegment innerhalb des Schutzfeldes (15, 15') ist.

6. Optischer Sensor (1) nach einem der Ansprüche 1 bis 5, **dadurch gekennzeichnet, dass** mehrere Schutzfelder (15, 15') und/oder mehrere Restschutzfelder (18) vorgesehen sind.

7. Optischer Sensor (1) nach einem der Ansprüche 1 bis 6, **dadurch gekennzeichnet, dass** in diesem zulässige Objektstrukturen kennzeichnende Sollwerte abgespeichert werden, die mit von dem optischen Sensor (1) ermittelten Messwerten als Istwerte verglichen werden.

8. Optischer Sensor (1) nach einem der Ansprüche 1 bis 7, **dadurch gekennzeichnet, dass** die zulässigen Objektstrukturen von Merkmalen oder Konturen zulässiger Objekte gebildet sind.

9. Optischer Sensor (1) nach Anspruch 8, **dadurch gekennzeichnet, dass** zulässige Objektkonturen in Form von Parametern vorgegeben sind oder in einem Einlernvorgang bestimmt werden.

10. Optischer Sensor (1) nach einem der Ansprüche 7 bis 9, **dadurch gekennzeichnet, dass** in mehreren Messzyklen Messwerte ermittelt werden und anschließend gemittelt werden, wobei die gemittelten Messwerte die Istwerte bilden.

11. Optischer Sensor (1) nach einem der Ansprüche 1 bis 10, **dadurch gekennzeichnet, dass** dieser ein Distanzsensor ist.

12. Optischer Sensor (1) nach Anspruch 11, **dadurch gekennzeichnet, dass** dieser ein Kamerasensor oder ein Laserscanner ist.

13. Optischer Sensor (1) nach einem der Ansprüche 1 bis 12, **dadurch gekennzeichnet, dass** dieser ein Sicherheitssensor ist.

14. Verfahren zur Erfassung von Objekten (9) in einem Erfassungsbereich mittels eines optischen Sensors (1), wobei in dem optischen Sensor (1) ein Schutzfeld (15, 15') vorgegeben ist, und wobei in dem optischen Sensor (1) bei Erfassen eines Objekteingriffs im Schutzfeld (15, 15') ein Objektfeststellungssignal generiert wird, **dadurch gekennzeichnet, dass** im optischen Sensor (1) abhängig von der Erfassung eines zulässigen Objekts ein Restschutzfeld (18) innerhalb des Schutzfeldes (15, 15') generiert wird, und dass bei einem Objekteingriff im Restschutzfeld (18) im optischen Sensor (1) nur dann ein Objektfeststellungssignal generiert wird, wenn dieser Objekteingriff eine Abweichung von einer Objektstruktur des zulässigen Objekts darstellt.

## Claims

1. An optical sensor (1) for detecting objects (9) in a detection range, a protective field (15, 15') being predefined in the optical sensor (1), and an object detection signal being generated in the optical sensor (1) when an object is detected in the protective field (15, 15'), **characterised in that** a residual protective field (18) is generated within the protective field (15, 15') in the optical sensor (1) as a function of the detection of a permissible object, and **in that**, in the event of an object engagement in the residual protective field (18), an object detection signal is generated in the optical sensor (1) only if this object engagement represents a deviation from an object structure of the permissible obj ect.

2. An optical sensor (1) according to claim 1, **characterised in that** a permissible object contour detected by it forms a boundary of the residual protection field (18).

3. An optical sensor (1) according to one of claims 1 or 2, **characterised in that** the detection of the permissible object contour and the formation of the residual protective field (18) dependent thereon is time-dependent.

4. An optical sensor (1) according to one of claims 1 to 3, **characterised in that** the residual protective field (18) forms a partial region of the protective field (15, 15').

5. An optical sensor (1) according to one of claims 1 to 4, **characterised in that** the residual protective field (18) is an angular segment within the protective field (15, 15').

6. An optical sensor (1) according to one of claims 1 to 5, **characterised in that** a plurality of protective fields (15, 15') and/or a plurality of residual protective fields (18) are provided.

7. An optical sensor (1) according to one of the claims 1 to 6, **characterised in that** set values characterising permissible object structures are stored therein, which are compared with measured values determined by the optical sensor (1) as actual values.

8. An optical sensor (1) according to one of claims 1 to 7, **characterised in that** the permissible object structures are formed by features or contours of permissible objects.

9. An optical sensor (1) according to claim 8, **characterised in that** permissible object contours are predetermined in the form of parameters or are determined in a teach-in process.

10. An optical sensor (1) according to one of claims 7 to 9, **characterised in that** measured values are determined in several measuring cycles and are subsequently averaged, the averaged measured values forming the actual values.

11. An optical sensor (1) according to one of claims 1 to 10, **characterised in that** it is a distance sensor.

12. An optical sensor (1) according to claim 11, **characterised in that** it is a camera sensor or a laser scanner.

13. An optical sensor (1) according to one of claims 1 to 12, **characterised in that** it is a safety sensor.

14. A method for detecting objects (9) in a detection area by means of an optical sensor (1), wherein a protective field (15, 15') is predefined in the optical sensor (1), and wherein an object detection signal is generated in the optical sensor (1) when an object is detected in the protective field (15, 15'), **characterised in that in that** a residual protective field (18) within the protective field (15, 15') is generated in the optical sensor (1) as a function of the detection of a permissible object, and **in that**, in the event of an object engagement in the residual protective field (18), an object detection signal is generated in the optical sensor (1) only if this object engagement represents a deviation from an object structure of the permissible object.

## Revendications

1. Capteur optique (1) pour la détection d'objets (9) dans une zone de détection, un champ de protection (15, 15') étant prédéfini dans le capteur optique (1), et un signal de détection d'objet étant généré dans le capteur optique (1) lorsqu'un objet est détecté dans le champ de protection (15, 15'), **caractérisé en ce qu'**un champ de protection résiduel (18) est généré à l'intérieur du champ de protection (15, 15') dans le capteur optique (1) en fonction de la détection d'un objet autorisé, et **en ce que**, en cas d'engagement d'un objet dans le champ de protection résiduel (18), un signal de détection d'objet n'est généré dans le capteur optique (1) que si cet engagement d'objet représente un écart par rapport à une structure d'objet de l'objet autorisé.

2. Capteur optique (1) selon la revendication 1, **caractérisé par le fait que** le contour de l'objet autorisé qu'il détecte constitue une limite du champ de protection résiduel (18).

3. Capteur optique (1) selon l'une des revendications 1 ou 2, **caractérisé par le fait que** la détection du contour de l'objet autorisé et la formation du champ de protection résiduel (18) qui en dépendent sont fonction du temps.

4. Capteur optique (1) selon l'une des revendications 1 à 3, **caractérisé par le fait que** le champ de protection résiduel (18) forme une zone partielle du champ de protection (15, 15').

5. Capteur optique (1) selon l'une des revendications 1 à 4, **caractérisé par le fait que** le champ de protection résiduel (18) est un segment angulaire à l'intérieur du champ de protection (15, 15').

6. Capteur optique (1) selon l'une des revendications 1 à 5, **caractérisé en ce que** plusieurs champs de protection (15, 15') et/ou plusieurs champs de protection résiduels (18) sont prévus.

7. Capteur optique (1) selon l'une des revendications 1 à 6, **caractérisé par le fait qu'**il contient des valeurs de consigne caractérisant les structures d'objet autorisées, qui sont comparées aux valeurs mesurées déterminées par le capteur optique (1) en tant que valeurs réelles.

8. Capteur optique (1) selon l'une des revendications 1 à 7, **caractérisé par le fait que** les structures d'objets admissibles sont formées par des caractéristiques ou des contours d'objets admissibles.

9. Capteur optique (1) selon la revendication 8, **caractérisé par le fait que** les contours d'objets admissibles sont prédéterminés sous forme de paramètres ou déterminés dans le cadre d'un processus d'apprentissage.

10. Capteur optique (1) selon l'une des revendications 7 à 9, **caractérisé par le fait que** les valeurs mesurées sont déterminées au cours de plusieurs cycles de mesure et sont ensuite moyennées, les valeurs mesurées moyennées constituant les valeurs réelles.

11. Capteur optique (1) selon l'une des revendications 1 à 10, **caractérisé par le fait qu'**il s'agit d'un capteur de distance.

12. Capteur optique (1) selon la revendication 11, **caractérisé par le fait qu'**il s'agit d'un capteur de caméra ou d'un scanner laser.

13. Capteur optique (1) selon l'une des revendications 1 à 12, **caractérisé en ce qu'**il est un capteur de sécurité.

14. Procédé de détection d'objets (9) dans une zone de détection au moyen d'un capteur optique (1), dans lequel un champ de protection (15, 15') est prédéfini dans le capteur optique (1), et dans lequel un signal de détection d'objet est généré dans le capteur optique (1) lorsqu'un objet est détecté dans le champ de protection (15, 15'), **caractérisé en ce qu'**un champ de protection résiduel (18) à l'intérieur du champ de protection (15, 15') est généré dans le capteur optique (1) en fonction de la détection d'un objet autorisé, et qu'en cas d'engagement d'un objet dans le champ de protection résiduel (18), un signal de détection d'objet n'est généré dans le capteur optique (1) que si cet engagement d'objet représente un écart par rapport à une structure d'objet de l'objet autorisé.
